# EUROPÄISCHE PATENTSCHRIFT

(11) **EP 0 614 517 B1**
(45) Veröffentlichungstag und Bekanntmachung des Hinweises auf die Patenterteilung: **12.03.1997**
(21) Anmeldenummer: 93920757.7
(22) Anmeldetag: 17.09.1993
(51) Int. Cl.: G01B 21/04

(54) **VERFAHREN UND VORRICHTUNG ZUR KOORDINATENMESSUNG AN WERKSTÜCKEN**
METHOD AND DEVICE FOR MEASURING THE COORDINATES OF WORKPIECES
PROCEDE ET APPAREIL POUR LA MESURE DES COORDONNEES SUR DES PIECES A USINER

(30) Priorität: 25.09.1992 DE 4232118
(43) Veröffentlichungstag der Anmeldung: 14.09.1994
(73) Patentinhaber: Carl Zeiss, D-89520 Heidenheim (Brenz) (DE); CARL ZEISS-STIFTUNG HANDELND ALS CARL ZEISS, D-89518 Heidenheim (Brenz) (DE)
(72) Erfinder: BREYER, Karl-Hermann, D-89518 Heidenheim (DE); KOCH, Klaus-Peter, D-73432 Aalen (DE); HEIER, Helmut, D-73431 Aalen (DE); PRESSEL, Hans-Gerd, D-73434 Aalen (DE)
(86) Internationale Anmeldenummer: EP9302523
(87) Internationale Veröffentlichungsnummer: WO9408205

(56) Entgegenhaltungen:
- EP-A- 0 420 416
- DE-A- 3 502 388
- JP-A- 4 225 173
- US-A- 4 908 951
- PATENT ABSTRACTS OF JAPAN vol. 16, no. 577 (P-1460) 16. Dezember 1992 & JP-A-04 225 173
- PATENT ABSTRACTS OF JAPAN vol. 15, no. 364 (P-1252) 13. September 1991 & JP-A-03 142 301

## Beschreibung

Für die Koordinatenmessung an Werkstücken werden in der Regel Koordinatenmeßgeräte mit sogenannten messenden oder schaltenden Tastköpfen eingesetzt. Derartige Geräte vermessen die Werkstückoberfläche direkt durch berührenden mechanischen Kontakt mit dem am auslenkbaren Teil des Tastkopfs befestigten Tastelement. Das Tastelement ist meist eine Kugel.

Daneben sind auch Koordinatenmeßgeräte bekannt, die einen sogenannten optischen Tastkopf tragen, der das Meßobjekt berührungslos "antastet". Als optische Tastköpfe finden neben mit Lichtpunkten arbeitenden z.B. Triangulationstaster meist sogenannte Videotastköpfe Verwendung, d. h. Videokameras, die einen größeren Teil der Werkstückoberfläche gleichzeitig erfassen. Die Koordinaten interessierender Geometrieelemente des Werkstücks werden dann beispielsweise über eine Bildverarbeitungssoftware ermittelt.

JP-A- 4 225 173 beschreibt ein Koordinatenmeßgerät mit Videokamera und mechanischem Taststift. Ein zu vermessender Punkt wird erst mit der Videokamera aufgenommen und darum anhand der Videobilddaten rechnergesteuert mit dem mechanischen Tastelement angefahren.

In letzter Zeit sind auch kombinierte, optisch und mechanisch antastende Koordinatenmeßgeräte bekannt geworden. Ein solches Gerät ist beispielsweise in der US-PS 4 908 951 beschrieben. Das bekannte Gerät besitzt zwei Pinolen, von denen die eine den mechanischen Tastkopf trägt, während die andere eine Videokamera hält, in deren Strahlengang gleichzeitig noch ein Lasertaster für Messungen in der z-Koordinate, d.h. entlang der optischen Achse der Videokamera eingespiegelt ist.

Solche kombinierten optisch und mechanisch antastenden Koordinatenmeßgeräte erlauben nicht nur die Vermessung unterschiedlicher Werkstücke wie z.B. Leiterplatten oder Motorengehäuse mit der jeweils auf sie am besten angepaßten Meßmethode berührungslos optisch bzw. berührend mechanisch, es ist auch möglich, Stellen am gleichen Werkstück einmal mit der Videokamera und zum anderen mit dem mechanischen Taster zu vermessen, da der gegenseitige Bezug der beiden Tastsysteme über einen Kalibriervorgang hergestellt werden kann.

Der eigentliche Meßvorgang läuft dann folgendermaßen ab:
a) handgesteuerter Betrieb hier wird die mit dem mechanischen Tastkopf anzutastende Stelle am Werkstück unter direkter Sichtkontrolle angefahren nach der meist akustisch angezeigten Berührung des Werkstücks durch das Tastelement übernimmt der Rechner die Koordinaten des Antastpunktes und der Benutzer fährt mit dem Tastelement die nächste Meßstelle an der Werkstückoberfläche an. Beim Messen mit der Videokamera wird diese über die entsprechende Stelle am Werkstück gefahren, mit Hilfe des Monitors wird die Scharfstellung des Bildes der Werkstückoberfläche überwacht und anschließend die Datenübernahme ausgelöst;
b) CNC-Betrieb hier werden die vom mechanischen Tastkopf bzw. von der Videokamera anzufahrenden Positionen entweder teilefern programmiert oder es wird im Rahmen einer sogenannten Lernprogrammierung an einem Musterstück der Bewegungsablauf einschließlich des Anfahrens der Tastpositionen für das spezielle Meßprogramm einmal durchgeführt, dann abgespeichert und dann im Serienmeßbetrieb an einer Reihe gleichartiger zu vermessender Teile dann beliebig oft wiederholt.

Das handgesteuerte Antasten kann nun insbesondere bei komplizierten Werkstücken mit schlecht zugänglichen Innenflächen Probleme bereiten, da es schwierig ist, den Sichtkontakt zum Tastelement zu halten. Geht dieser verloren, so besteht die Gefahr, daß durch Kollision mit dem Werkstück Tastkopf oder Taststift beschädigt werden oder die falsche Stelle am Werkstück angetastet wird. Diese Gefahr besteht auch während der Lernprogrammierung des CNC-Betriebs, da dort das Tastelement ebenfalls handgesteuert verfahren wird.

Zwar ist es aus der DD-PS 12 609 bekannt, Bohrungen mit Hilfe einer beleuchtenden Meßperle unter visueller Kontrolle zu vermessen, wobei die Meßperle mechanisch mit der Bohrungswand in Kontakt gebracht wird. Das in der genannten PS beschriebene Verfahren findet jedoch nicht auf einem Koordinatenmeßgerät Anwendung und die Meßperle ist auch kein mechanischer Taster dergestalt, daß dieser selbständig die Koordinaten des Antastpunktes registriert. Vielmehr dient die Meßperle lediglich als Meßmarke, mit deren Hilfe der Bohrungsdurchmesser visuell anhand einer Okular-Platte in einem Meßmikroskop bestimmt wird. Das Verfahren kann außerdem nur bei Bohrungen eingesetzt werden, die beidseitig zugänglich sind.

DE-A-35 02 388 beschreibt eine Tisch-Koordinatenmeßgerät, bei dem der Tasten über eine Objektiv-Okular Optik betrachtet werden kann.

Es ist die Aufgabe der vorliegenden Erfindung, die Sicherheit beim mechanischen Antastvorgang mit einem Koordinatenmeßgerät im handgesteuerten Betrieb zu erhöhen bzw. den Meßablauf für die Bedienperson zu vereinfachen.

Diese Aufgabe wird gemäß der vorliegenden Erfindung mit der in Anspruch 1 angegebenen Methode und der in Anspruch 2 angegebenen Vorrichtung gelöst.

Hierbei wird das Anfahren bzw. Antasten der mechanisch zu vermessenden Stelle durch das Tastelement visuell mit Hilfe der Videokamera und eines Monitors überwacht. Das ist insbesondere dann vorteilhaft, wenn mit sehr kleinen Taststiften in Bohrungen eingetaucht wird, zu denen der direkte Sichtkontakt nicht oder nur unter großen Schwierigkeiten gehalten werden kann. Größeren Zusatzaufwand erfordert das Verfahren nicht, da Videokamera und Monitor bei einem kombiniert optisch und mechanisch messenden Koordinatenmeßgerät ohnehin vorhanden sind. Es ist lediglich sicherzustellen, daß sich das Tastelement während des Meßvorganges im Sehfeld der Videokamera befindet. Das kann durch eine geeignete Ausrichtung von Videokamera und mechanischem Taster sichergestellt werden, indem beispielsweise das Tastelement über einen Ausleger bzw. Winkelstück am Tastkopf befestigt ist, oder das Tastelement bzw. der gesamte mechanische Tastkopf bzw. die Videokamera dreh- bzw. schwenkbar an der verfahrbaren Pinole bzw. dem Querarm des Koordinatenmeßgerätes befestigt ist. Es ist auch möglich, allein den Strahlengang der Videokamera in Richtung auf das Tastelement umzulenken, beispielsweise durch einen Spiegel oder ein Prisma oder geeignete flexible bildleitende Elemente wie z.B. Glasfaserkabel.

Damit die räumlich/geometrische Beziehung zwischen dem mechanischen Tastkopf und der Videokamera langzeitstabil gewährleistet ist, sind beide vorzugsweise an einem gemeinsamen Träger befestigt. Zur Anpassung an unterschiedliche Meßaufgaben kann das Tastelement des mechanischen Tastkopfes wie in solchen Fällen üblich über eine Wechselhalterung austauschbar am Tastkopf befestigt sein.

Besondere Vorteile bietet die Erfindung, wenn der mechanische Tastkopf ein miniaturisierter Tastkopf in Form eines sogenannten Schwingquarztasters ist, wie er beispielsweise im deutschen Gebrauchsmuster 91 15 942 beschrieben ist und ohnehin nur einen Taststift von wenigen mm Länge und ein Tastelement in Form einer Kugel von einem Zehntel mm Durchmesser besitzt. Hier ist die Gefahr, daß im Zuge des mechanischen Antastvorganges nicht nur der Taststift abbricht sondern das gesamte Tastsystem beschädigt wird, besonders groß.

Ein solcher mechanischer Miniaturtaster ist zweckmäßig gemeinsam mit einer Videokamera auf dem gleichen Wechselhalter befestigt und kann dann beispielsweise gegen einen "großen" Taststift an den Tastkopf eines rein mechanisch arbeitenden Koordinatenmeßgerätes eingewechselt werden, wobei dieses dann zusätzlich mit Hilfe des Schwingquarztasters Meßaufgaben erledigen kann, die weder mit einem herkömmlichen mechanischen Tastkopf noch mit einem rein optischen z.B. Videotastkopf gelöst werden können.

Zur besseren Sichtbarmachung des Tastelementes kann es weiterhin vorteilhaft sein, eine Beleuchtungseinrichtung vorzusehen, die das Tastelement zur Aussendung von Streustrahlung anregt.

Schließlich ist es insbesondere beim Arbeiten in Bohrungen und sonstigen Hohlräumen des Werkstücks von Vorteil, den Videotastkopf so auszulegen, daß er zwei zur Aufnahme von Stereobildern geeignete Optiken enthält und das Tastelement in dem für beide Optiken gemeinsamen Teil des Sehfelds anzuordnen. Auf diese Weise kann die Tiefenauflösung dieses photogrammetrisch-optischen Videotastkopfs für Messungen in z-Richtung ausgenutzt werden. Gleichzeitig wird das Positionieren des Tastelementes durch die Bedienperson bei Verwendung eines geeigneten 3D-Monitors verbessert. Ein solcher Monitor ist beispielsweise in dem deutschen Patent 41 34 033 beschrieben, auf das hier ausdrücklich Bezug genommen wird.

Wenn die optische Achse der Videokamera gegen eine der Maschinenachsen des Koordinatenmeßgerätes geneigt ist, dann ist es aufgrund der Parallaxe zwischen der Fahrrichtung und der Zielrichtung schwierig, den gewünschten Punkt am Werkstück manuell anzufahren. Hier ist es vorteilhaft, die Steuerung des Koordinatenmeßgerätes so einzurichten, daß der Tastkopf des Gerätes gleichzeitig in mindestens zwei Maschinenachsen verfahren wird entsprechend dem Neigungswinkel zwischen der optischen Achse der Videokamera und der betreffenden Maschinenachse.

Mit dem erfindungsgemäßen Verfahren läßt sich nicht nur der Meßablauf bei der eigentlichen Inspektion der zu prüfenden Teile sicherer machen bzw. vereinfachen. Auch das Programmieren von Meßabläufen an Musterwerkstücken läßt sich vereinfachen, indem dort die mit dem mechanischen Taster anzutastenden Stellen des Werkstücks vorher, d.h. im Zuge der Lernprogrammierung nicht mit einem mechanischen Taster sondern mit dem Videotastkopf angefahren werden. Da im Zuge dieses manuell gesteuerten Vorganges gar kein mechanischer Taster zum Einsatz kommt, sind Beschädigungen sicher vermieden. In diesem Zusammenhang ist es zweckmäßig, wenn die später mechanisch anzutastenden Stellen des Werkstücks mit dem Videotastkopf unter Monitorkontrolle angefahren werden und dem Bild auf dem Monitor eine elektronisch erzeugte Marke überlagert wird, die in Form und Größe dem Tastelement des mechanischen Tastkopfs entspricht, mit dem anschließend der eigentliche Meßablauf durchgeführt wird.

Weiterhin ist es vorteilhaft, der Videokamera eine Beleuchtungseinrichtung mit mehreren Lichtquellen zuzuordnen, die in verschiedenen Richtungen strahlen und deren Elektronik so ausgelegt ist, daß die Lichtquellen einzeln oder gruppenweise ansteuerbar sind. Mit einer solchen Beleuchtungseinrichtung wie sie u.a. in dem US-Patent 5 038 258 beschrieben ist, läßt sich die Intensität bzw. die Richtung des Lichteinfalls gezielt einstellen und optimal an die jeweilige Meßaufgabe anpassen.

Weitere Vorteile der Erfindung ergeben sich aus der nachfolgenden Beschreibung von Ausführungsbeispielen anhand der Figuren 1 bis 8 der beigefügten Zeichnungen. Hierbei sind
- Fig. 1: eine vereinfachte perspektivische Skizze eines zur Durchführung des erfindungsgemäßen Verfahrens geeigneten Koordinatenmeßgerätes;
- Fig. 2: zeigt den Tastkopf des Koordinatenmeßgerätes aus Fig. 1 in vergrößertem Maßstabe teils im Schnitt, teils in Ansicht;
- Fig. 3: zeigt ein im Vergleich zu Fig. 2 leicht geändertes Ausführungsbeispiel für den Tastkopf;
- Fig. 4: zeigt ein drittes gegenüber Fig. 2 und 3 leicht geändertes Ausführungsbeispiel des Tastkopfes;
- Fig. 5a: zeigt ein viertes gegenüber Fig. 2 und 3 leicht geändertes Ausführungsbeispiel des Tastkopfes;
- Fig. 5b: zeigt den Monitor (10) des Koordinatenmeßgerätes aus Fig. 1 mit dem Bild des von der Videokamera (6) in Fig. 5a aufgenommenen Tastelementes;
- Fig. 6: zeigt ein fünftes gegenüber Fig. 2 und 3 leicht geändertes Ausführungsbeispiel des Tastkopfes;
- Fig. 7: zeigt ein sechstes gegenüber Fig. 2 und 3 leicht geändertes Ausführungsbeispiel des Tastkopfes;
- Fig. 8: ist ein Blockschaltbild, das die wesentlichen Komponenten eines Koordinatenmeßgerätes zur Durchführung des Verfahrens nach Anspruch 3 zeigt.

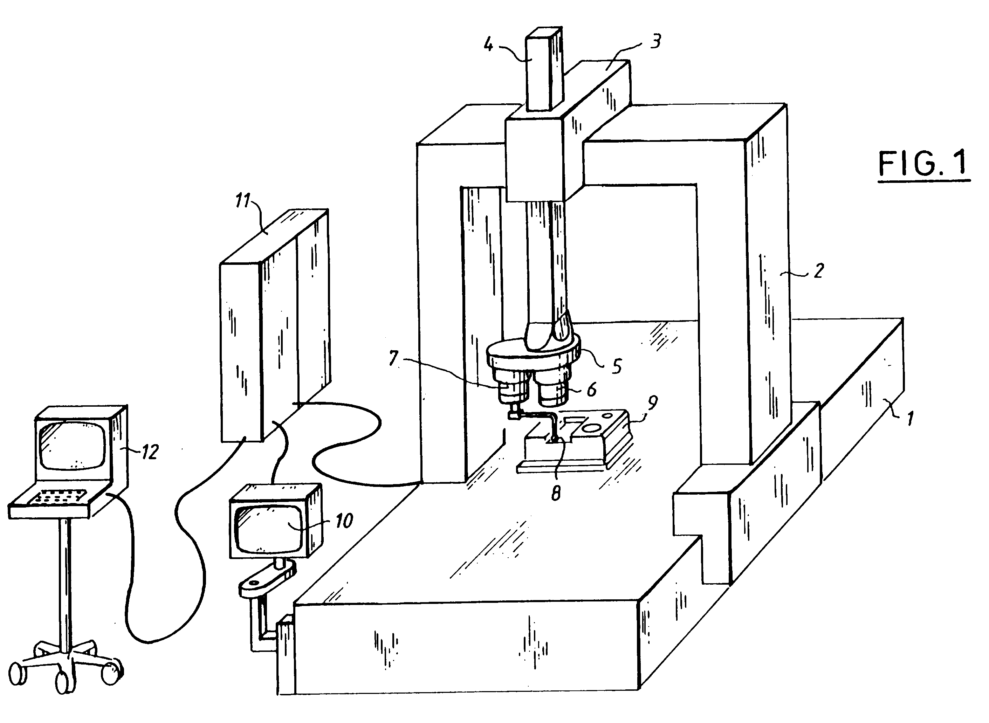

Das in Fig. 1 dargestellte Koordinatenmeßgerät vom Portaltyp besitzt einen Meßtisch aus z.B. Granit, auf den die zu vermessenden Werkstücke (9) aufgelegt werden. Der Granittisch dient außerdem zur Führung des beweglichen Portals (2) in y-Richtung. Der Querträger des Portals (2) bildet die x-Führung für den beweglichen Querschlitten (3), in dem die sogenannte Pinole (4) des Koordinatenmeßgerätes vertikal verschieblich gelagert ist. Am unteren Ende der Pinole (4) sind über eine gemeinsame Halterung (5) ein mechanischer Tastkopf (7) und eine Videokamera (6) befestigt.

Die Bewegungsabläufe des Koordinatenmeßgerätes werden von einer Steuerung (11) überwacht, die mit einem Rechner (12) kommuniziert. Der Rechner enthält des Meßprogramm für den CNC-Betrieb und die Auswerteprogramme für die Generierung der Meßergebnisse.

Auf einem Monitor (10) wird das von der Videokamera (6) aufgenommene Bild der Werkstückoberfläche wiedergegeben.

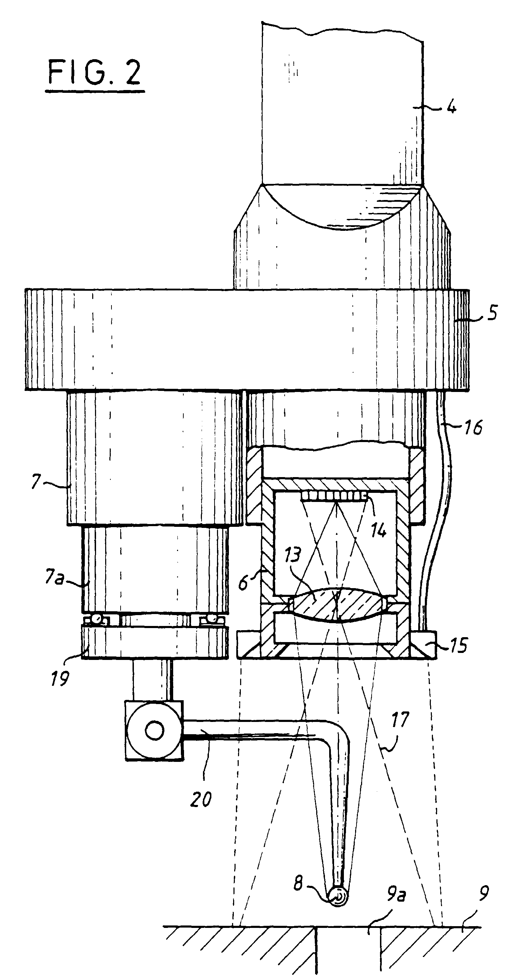

In Fig. 2 sind die am unteren Ende der Pinole (4) angebrachte Halterung (5), der daran befestigte Videotastkopf (6) und der mechanische Tastkopf (7) detaillierter dargestellt. Die Videokamera besitzt ein Objektiv (13), das die Werkstückoberfläche auf einen CCD-Chip (14) abbildet. Das Sehfeld dieses Videotastkopfes entspricht dem mit (17) bezeichneten Kegel. Dieses Sehfeld wird von einer um die Videokamera (6) gelegten faseroptischen Ringleuchte (15) beleuchtet. Anstelle der Ringleuchte kann auch eine Beleuchtungseinrichtung verwendet sein, wie sie in dem US-Patent 5 038 258 der Anmelderin beschrieben ist.

Am beweglichen bzw. auslenkbaren Teil (7a) des Tastkopfes (7) ist über eine an sich bekannte elektro-magnetische Wechselhalterung (19) die Tastkugel (8) des mechanischen Tasters befestigt und zwar über einen Taststift (20) in Form eines Winkelstückes, das so bemessen ist, daß sich die Tastkugel (8) im scharf abgebildeten Bereich des Sehfeldes (17) der Videokamera befindet. Es ist somit möglich, die Position der Tastkugel (8) relativ zum Werkstück (9) bzw. der dort zu vermessenden Bohrung (9a) sehr genau mit Hilfe des Monitors (10) zu verfolgen und den Antastvorgang beim Eintauchen in die Bohrung (9a) manuell zu steuern.

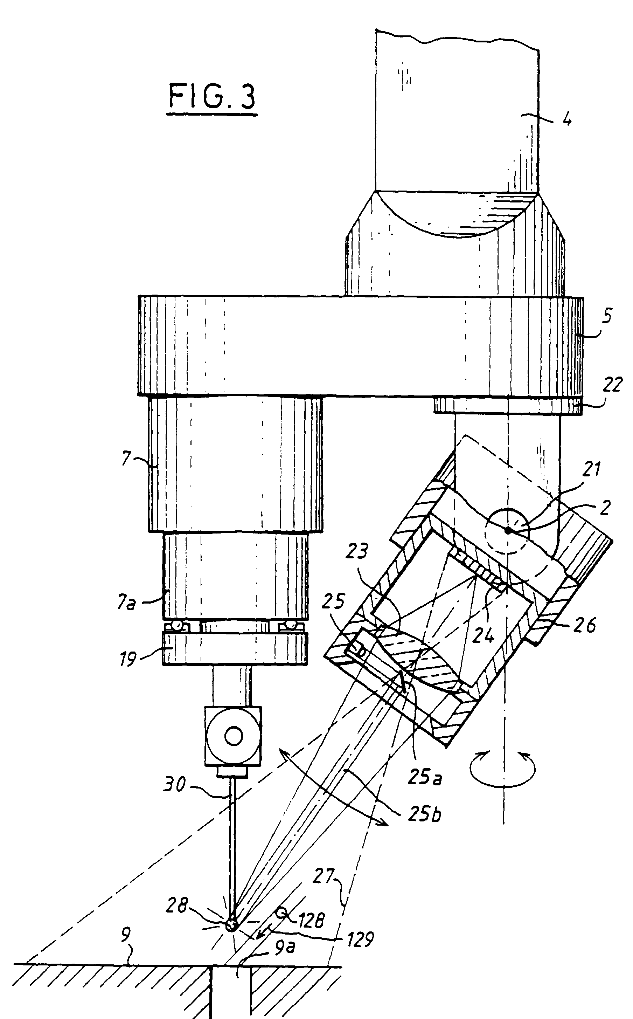

Gleiches gelingt auch mit dem in Fig. 3 dargestellten Aufbau nach einem alternativen Ausführungsbeispiel der Erfindung. Dort ist die Tastkugel (28) in herkömmlicher Weise über einen geraden entlang der Tasterachse ausgerichteten Taststift (30) am elektro-magnetischen Wechselhalter (19) des mechanischen Tastkopfs (7) befestigt. Hingegen ist jedoch die Videokamera (26) über ein Drehgelenk (22) und ein Schwenkgelenk (21) an der Halterung (5) befestigt und kann so in alle Raumrichtungen ausgerichtet werden. Für die visuelle Beobachtung des Antastvorganges ist die Videokamera (26) so ausgerichtet, daß ihr Objektiv (23) die Tastkugel (28) auf den Bildsensor (24) abbildet. Mit (27) ist wieder der Kegel bezeichnet, der die Abmessungen des Sehfeldes der Videokamera angibt.

Die Videokamera (26) enthält außerdem eine Hilfslichtquelle (25) in Form einer im sichtbaren Bereich strahlenden Laserdiode mit vorgesetzter Kollimatoroptik. Der von der Laserdiode ausgesandte Lichtstrahl wird über einen Spiegel (25a) vor dem Objektiv (23) der Videokamera in die optische Achse der Videokamera eingespiegelt und trifft bei korrekter Ausrichtung der Videokamera auf die Tastkugel (28) auf. Die von dort emittierte Streustrahlung läßt die Tastkugel (28) hell und deutlich auf dem Monitorbild erscheinen.

Wenn die Bedienperson nun unter visueller Kontrolle mit Hilfe des Monitors versucht die Tastkugel (28) über bestimmte anzutastende Punkte des Werkstückes (9), beispielsweise wie in der Figur dargestellt über der Bohrung (9a), zu positionieren, dann wird die Parallaxe aufgrund der Neigung der optischen Achse der Videokamera zur Werkstückoberfläche dazu führen, daß die Tastkugel eher an der mit (128) bezeichneten Stelle neben dem eigentlichen Zielpunkt positioniert wird. Beim anschließenden Antastvorgang, wenn der Tastkopf mit dem Taststift entlang der vertikalen Maschinenachse (z) verfahren wird, taucht die Tastkugel dann nicht in die Bohrung ein, sondern trifft auf die Werkstückoberfläche auf. Um das zu vermeiden und die Bedienung insofern zu erleichtern kann die Steuerung des Koordinatenmeßgerätes so programmiert sein, daß sie den Tastkopf (7) wie durch den Pfeil (129) angedeutet beim Verfahren in Richtung auf das Werkstück (9) in zwei Achsen gleichzeitig entsprechend der Neigung der Kameraachse verfährt.

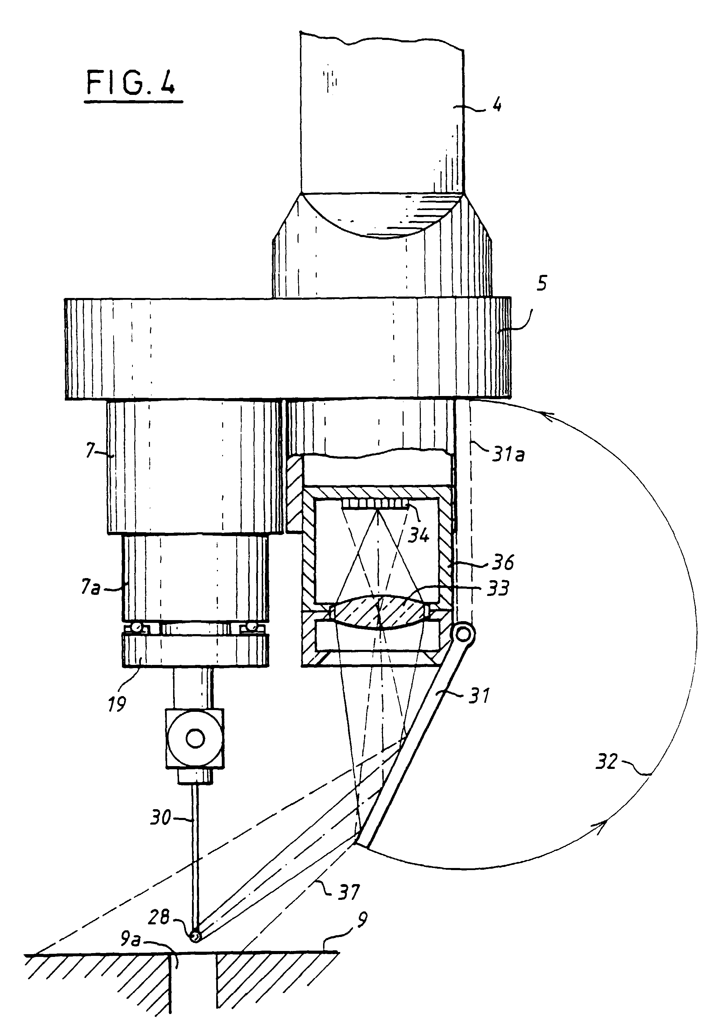

Im Ausführungsbeispiel nach Fig. 4 sind der mechanische Taster (7) und die Videokamera (36) wie im Ausführungsbeispiel nach Fig. 2 vertikal ausgerichtet an der Halterung (5) am unteren Ende der Pinole (4) befestigt. Der Taststift (30) mit der Tastkugel (28) des mechanischen Tasters (7) ist vertikal entlang der Tasterachse ausgerichtet.

Die Videokamera (36) ist jedoch mit einem Schwenkspiegel (31) ausgerüstet, der zur visuellen Überwachung der Position der Tastkugel (28) in die in Fig. 4 fett ausgezeichnete Stellung geschwenkt wird und den Strahlengang des Objektivs (33) der Videokamera (36) so umlenkt, daß sich die Tastkugel (28) im Sehfeld des Sensors (34) der Videokamera (36) befindet.

Für Meßaufgaben, bei denen allein die Videokamera (36) benötigt ist, wird der Schwenkspiegel (31) wie durch den Pfeil (32) angedeutet in die gestrichelt gezeichnete Position (31a) geklappt.

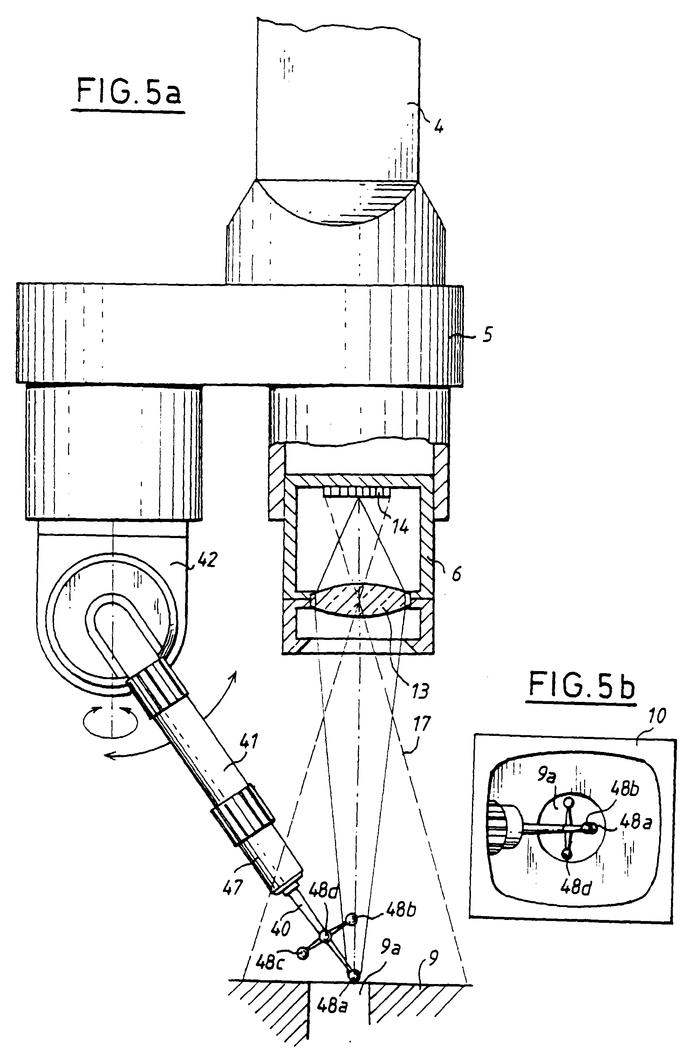

Im Ausführungsbeispiel nach Fig. 5a trägt die Halterung (5) am unteren Ende der Pinole (4) die gleiche schon anhand von Fig. 2 beschriebene Videokamera (6). Bei dem mechanischen Tastkopf (47) handelt es sich allerdings um einen kleinen, richtungsunabhängigen schaltenden Tastkopf, der über eine Verlängerung (41) an ein sogenanntes Dreh-/Schwenkgelenk (42) angesetzt ist und demzufolge in beliebige Raumrichtungen ausgerichtet werden kann. Der Tastkopf (47) trägt einen Sterntaster (40) mit fünf Tastkugeln (48a-e).

Für die visuelle Kontrolle des mechanischen Antastvorganges mit Hilfe des Monitors (10) ist der Tastkopf (47) so ausgerichtet, daß der Sterntaster (40) im Sehfeld (17) des Objektivs (13) der Videokamera liegt.

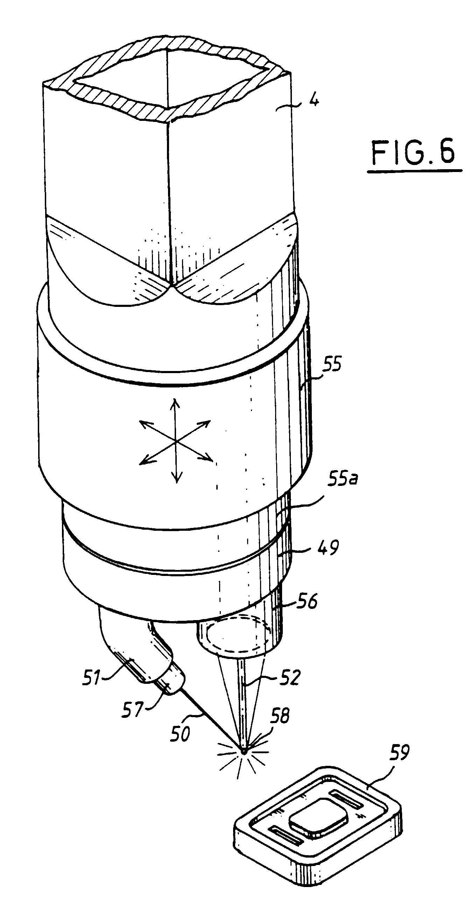

Im Ausführungsbeispiel nach Fig. 6 ist an die Pinole (4) direkt ein Tastkopf (55) vom sogenannten messenden Typ angesetzt. Ein solcher Tastkopf ist beispielsweise in der US-PS 3 869 799 bzw. der DE-OS 38 23 993 beschrieben.

Der bewegliche Teil (55a) dieses Tastkopfs kann über hier nicht näher dargestellte Aktuatoren über Wege von mehreren mm bzw. cm Länge wie durch die Pfeile angedeutet in die drei Raumrichtungen ausgelenkt werden. In den beweglichen Teil (55a) des messenden Tastkopfs (55) ist eine elektro-magnetische Wechselvorrichtung integriert, wie sie beispielsweise in der US-PS 4 637 119 beschrieben ist. Der Wechselteller dieser elektro-magnetischen Wechseleinrichtung ist mit (49) bezeichnet und trägt an seiner Unterseite sowohl eine kleine Videokamera (56) als auch über ein Winkelstück (51) einen mechanischen Tastkopf (57) in Form eines sogenannten Schwingquarztasters. Der Schwingquarztaster besteht aus einem bei ca. 40 kHz schwingenden Quarz, an den ein Glasstäbchen (50) von mehreren mm Länge angesetzt ist. Das Glasstäbchen (50) trägt an seinem vorderen Ende ein Tastelement (58). Dieses besteht auf einer am Glasstäbchen (50) aufgeschmolzenen Glaskugel.

Das Winkelstück (51) ist drehbar am unteren Ende des Wechseltellers (59) befestigt und im vorliegenden Falle so ausgerichtet, daß sich das Antastelement (58) im Sehfeld der Videokamera (56) befindet. Es wird von einem in den Strahlengang der Videokamera eingespiegelten sichtbaren Laserstrahl (52) beleuchtet und ist deshalb auf den Schirm des hier nicht dargestellten Monitors deutlich sichtbar.

Mit dem Tastelement (58) werden unter Sichtkontrolle mit Hilfe des Monitors des Koordinatenmeßgerätes unter Handsteuerung filigrane Strukturen eines Kunststoffgehäuses (59) vermessen. Hier ist guter Sichtkontakt besonders wichtig um zu verhindern, daß infolge von Schaftantastungen das Glasstäbchen (50) des Schwingquarztasters abbricht.

Beim Ausmessen der Stege und Vertiefungen des Kunststoffgehäuses (59) wird nicht nur im schaltenden Betrieb gearbeitet und das Tastelement (58) mit Hilfe der Antriebe in den drei Achsen des Koordinatenmeßgerätes bewegt. Vielmehr ist es ebenfalls möglich, mit den im Tastkopf (55) integrierten Aktuatoren kleinere Bereiche der Werkstückoberfläche bei Stillstand der Maschinenachsen abzuscannen. Hierbei bleibt die Tastkugel (58) während des Scanvorganges in direktem Kontakt mit dem Werkstück (59).

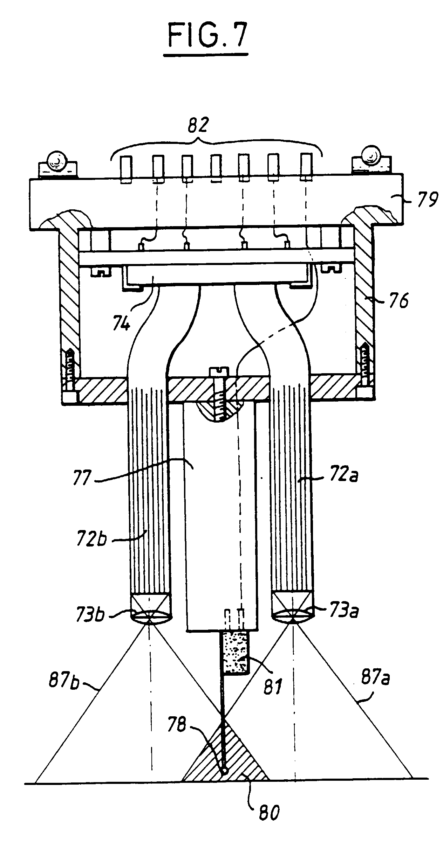

Anstelle des Wechseltellers (49) im Ausführungsbeispiel nach Fig. 6 kann ein zweiter Wechselteller (79) mit der in Fig. 7 beschriebenen optisch-mechanischen Tasterkombination eingewechselt werden. Dieser Taster besteht aus einem photogrammetrischen Videotastkopf d.h. einem Videotastkopf mit zwei Optiken (73a und 73b), deren Bild über faseroptische Bildleiter (72a und 72b) auf die lichtempfindliche Oberfläche des Bildsensors (74) der Videokamera übertragen wird. Auf diese Weise entsteht ein Stereobild des gemeinsam von den beiden Sehfeldern (87a und 87b) der beiden Optiken überdeckten Bereichs (80).

Zwischen den beiden Optiken (73a und 73b) des Videotastkopfs (76) ist ein mechanischer Schwingquarztaster (77) angeordnet. Dessen Schwingquarz (81) trägt wie im Ausführungsbeispiel nach Fig. 6 ein Glasstäbchen von mehreren mm Länge, an dessen Ende eine Kugel (78) aufgeschmolzen ist, die das Antastelement bildet. Diese Kugel (78) befindet sich in dem gemeinsam überdeckten Bereich (80) der beiden Sehfelder (87a und 87b) des Videotastkopfs (76).

Mit einem geeigneten Stereomonitor läßt sich deshalb die Position des Antastelementes (78) im Raum visuell sehr gut verfolgen und der manuelle Antastvorgang steuern. Hierbei werden die auszumessenden Stellen an den Werkstücken direkt unter Sichtkontrolle durch die Bedienperson mit dem Tastelement (78) angefahren.

Die elektrische Versorgung des Videotastkopfs und des Schwingquarztasters erfolgt über Kontakte (82) an der Rückseite des Wechseltellers (49). Über diese Kontakte gelangen auch die Signale des Bildsensors (74) an die Steuerung des Koordinatenmeßgerätes.

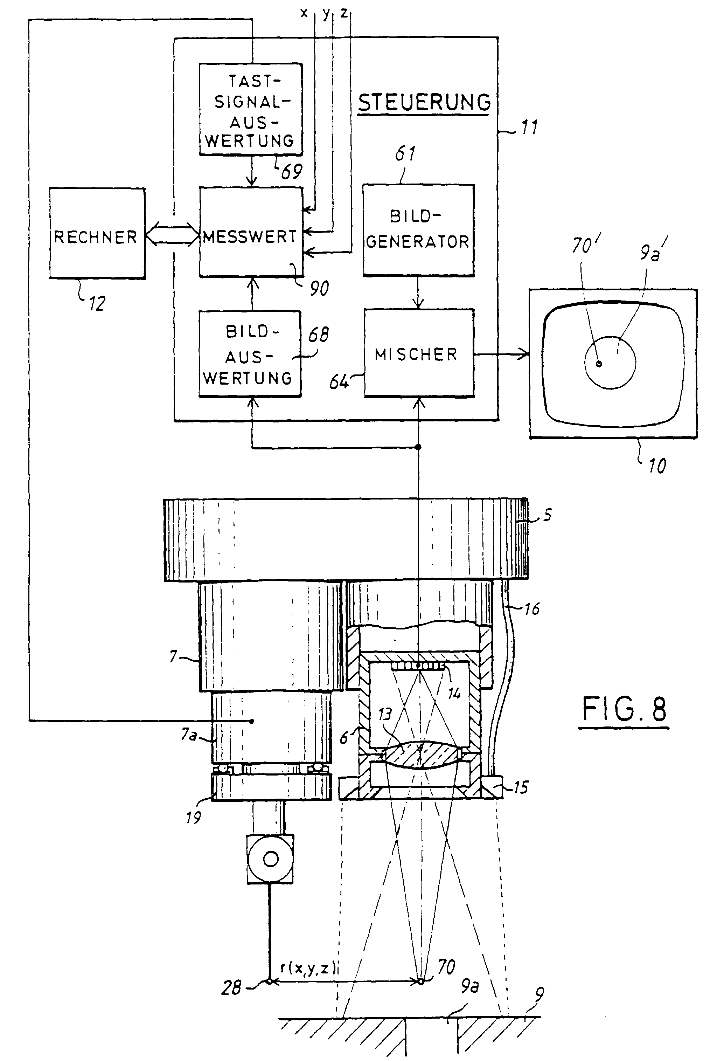

Neben dem manuellen Anfahren der Meßstellen mit dem mechanischen Tastelement ist es weiterhin möglich, die Meßstellen im Zuge der Lernprogrammierung allein mit der Videokamera unter Monitorkontrolle anzufahren und die Tastpositionen zu bestimmen, die anschließend im CNC-Lauf dann von dem mechanischen Tastelement angetastet werden sollen. Das Blockdiagramm eines für dieses Verfahren geeigneten Koordinatenmeßgerätes ist in Fig. 8 dargestellt. Von seinem mechanischen Aufbau her entspricht das Koordinatenmeßgerät nach Fig. 8 dem in Fig. 1 und Fig. 2 mit dem Unterschied, daß an den Tastkopf (7) ein Tastelement (28) eingewechselt ist, welches nicht notwendigerweise im Bildfeld (17) der Videokamera (6) liegt. Es besitzt vielmehr einen Abstand (r [x, y, z]) zum Fokuspunkt (70) der Videokamera (6). Dieser Abstand kann in an sich bekannter Weise durch Kalibrierung in Form eines Vergleichs zwischen den mit dem mechanischen Tastkopf (7) gewonnenen Meßwerten und den mit dem Videotastkopf (6) ermittelten Meßwerten an einem gemeinsamen Musterwerkstück (Lehrring) bestimmt werden.

Die mit dem Rechner (12) des Koordinatenmeßgerätes über einen Datenbus verbundene Steuerung (11) enthält die für die Steuerung des Bewegungsablaufes des Koordinatenmeßgerätes notwendigen Komponenten sowie Module, die für die Meßwerterfassung notwendig sind. Beispielsweise ist mit (90) das Modul bezeichnet, das aus den Signalen der photoelektrischen Längenmeßsysteme in den drei Meßachsen (x, y, z) des Koordinatenmeßgerätes und den in einem Modul (69) aufbereiteten Signalen des Tastkopfes (7) den mit dem mechanischen Tastkopf aufgenommenen Meßwert generiert. Die Steuerung (11) enthält außerdem ein Modul "Bildauswertung" (68), das die Videosignale des Bildsensors (14) der Videokamera weiter verarbeitet und in Verbindung mit den Signalen der Wegmeßsysteme den von der Videokamera generierten Meßwert der optischen Antastung geliefert.

Außerdem enthält die Steuerung (11) einen Bildgenerator (61) dessen Ausgangssignal über einen Mischer (64) auf den Monitor (10) gegeben ist. Der Bildgenerator überlagert dem Monitorbild eine Meßmarke (70'), die der Tastkugel (28) in Form und Größe unter Berücksichtigung des Abbildungsmaßstabs entspricht. Diese Meßmarke (70') representiert den Fokuspunkt (70) der Videokamera (6).

Da das Bild der Meßmarke (70') dem Bild der Werkstückoberfläche (9) überlagert ist, können mit dem auf diese Weise "simulierten" Tastelement im Zuge der Lernprogrammierung die Stellen an einem Musterwerkstück angefahren werden, die anschließend im CNC-gesteuerten Serienmeßbetrieb direkt von der Tastkugel (28) angetastet werden sollen. Zur Durchführung dieses Verfahrens bringt die Bedienperson während der Lernprogrammierung handgesteuert unter visueller Kontrolle des Monitorbildes die Meßmarke (70') mit den auf dem Monitor dargestellten Meßstellen an den Geometrieelementen des Werkstücks (9), zum Beispiel der Bohrung (9a) zur Deckung und löst die Datenübernahme aus, wobei die Koordinaten der anzutastenden Stellen abgespeichert werden. Diese Koordinaten werden anschließend mit Hilfe der in dem vorstehend beschriebenen Kalibriervorgang ermittelten bekannten räumlichen Beziehung (r [x, y, z]) zwischen dem mechanischen Tastelement (28) und dem Fokuspunkt (70 bzw. 70') der Videokamera in Antastkoordinaten des mechanischen Tastelementes (28) umgerechnet. Sie können dann nach gegebenenfalls notwendiger Umrechnung in das Werkstück-Koordinatensystem der CNC-gesteuert zu vermessenden Teile unter Rechnerkontrolle automatisch mit dem Tastelement (28) angefahren werden.

Während der Lernprogrammierung mit Hilfe der das Antastelement simulierenden Meßmarke ist es nicht erforderlich, den Taststift mit dem Tastelement (28) einzuwechseln. Dieser kann vielmehr anschließend eingewechselt und relativ zur Videokamera kalibriert werden.

## Patentansprüche

1. Verfahren zur Koordinatenmessung an Werkstücken mit einem Koordinatenmeßgerät (1-4), das eine Videokamera (6, 26, 36, 56, 66, 76), und einen mechanischen Tastkopf (7, 47, 57, 77) mit einem Tastelement (8, 28, 48, 58, 78) zur berührenden Vermessung der Werkstückoberfläche trägt, wobei die Videokamera und der mechanische Tastkopf so zueinander ausgerichtet sind, daß sich das Tastelement im Sehfeld (17, 27, 37, 87) der Videokamera befindet, wobei die mit dem Tastelement mechanisch anzutastenden Stellen am Werkstück unter gleichzeitiger visueller Kontrolle mit Hilfe eines an die Videokamera angeschlossenen Monitors (10) von dem mechanischen Tastelement angefahren werden.

2. Koordinatenmeßgerät mit
- einer Videokamera (6, 26, 36, 56, 66), die mit einem Monitor (10) verbunden ist,
- einem in mindestens zwei Raumrichtungen verfahrbaren mechanischen Tastkopf (7, 47, 57, 77), der ein Tastelement (8) trägt,
- einem Rechner (12) sowie einer daran angeschlossenen Steuereinheit (11), von der die Bewegungen des Tastkopfes gesteuert und die von dem Tastkopf abgegebenen Meßsignale weiterverarbeitet werden,
- wobei die Videokamera und der mechanische Tastkopf so zueinander ausgerichtet sind, daß sich das Tastelement im Sehfeld (17, 27, 37, 87) der Videokamera befindet, damit die mit dem Tastelement mechanisch anzutastenden Stellen am Werkstück unter gleichzeitiger visueller Kontrolle mit Hilfe des Monitors von dem mechanischen Tastelement angefahren werden kömmen.

3. Koordinatenmeßgerät nach Anspruch 2, wobei das Tastelement (8) am Tastkopf (7) über einen Ausleger (20) bzw. ein Winkelstück oder dergleichen befestigt ist.

4. Koordinatenmeßgerät nach Anspruch 2, wobei das Tastelement (40) drehbar bzw. schwenkbar ist.

5. Koordinatenmeßgerät nach Anspruch 2, wobei die Videokamera (26) drehbar- bzw. schwenkbar ist.

6. Koordinatenmeßgerät nach Anspruch 2, wobei ein den Strahlengang der Videokamera (36) in Richtung auf das Tastelement (28) umlenkendes Element (31) vorgesehen ist.

7. Koordinatenmeßgerät nach Anspruch 2, wobei die Videokamera (6) und der mechanische Tastkopf (7) an einem gemeinsamen Träger (5) befestigt sind und das Tastelement (8) des mechanischen Tastkopfes über eine elektro-mechanische Wechseleinrichtung (19) am beweglichen Teil (7a) des Tastkopfes befestigt ist.

8. Koordinatenmeßgerät nach einem der Ansprüche 2-7, wobei der mechanische Tastkopf ein Miniaturtastkopf in Form eines Schwingquarztasters (57, 77) ist.

9. Koordinatenmeßgerät nach einem der Ansprüche 2-8 mit einer Beleuchtungseinrichtung (25), die das Tastelement (28) sichtbar macht bzw. zu Streustrahlung anregt.

10. Koordinatenmeßgerät nach einem der Ansprüche 2-9, wobei die Videokamera (76) zwei zur Aufnahme von Stereobildern geeignete Optiken (73a, b) enthält und das Tastelement (78) sich in dem für beide Optiken gemeinsamen Teil (80) des Sehfeldes (87a, 87b) befindet.

11. Koordinatenmeßgerät nach einem der Ansprüche 2-10, wobei die optische Achse der Videokamera (26,36) gegen mindestens eine der Maschinenachsen des Koordinatenmeßgerätes geneigt ist und die Steuerung des Koordinatenmeßgerätes den mechanischen Tastkopf in mindestens zwei Koordinatenrichtungen gleichzeitig verfährt, entsprechend dem Neigungswinkel zwischen der optischen Achse der Videokamera und der betreffenden Maschinenachse (z).

12. Koordinatenmeßgerät nach einem der Ansprüche 2-11, wobei der Videokamera eine Beleuchtungseinrichtung mit mehreren Lichtquellen zugeordnet ist, die in verschiedenen Richtungen strahlen, und wobei die Lichtquellen einzeln oder gruppenweise so ansteuerbar sind, daß die Intensität und/oder Richtung des Beleuchtungslichts einstellbar ist.

13. Koordinatenmeßgerät nach Anspruch 2, wobei die Videokamera (56, 76) und der mechanische Tastkopf (57, 77) bzw. das Tastelement des Tastkopfes gemeinsam an dem gleichen Wechselhalter (49, 79) befestigt sind.

## Claims

1. Method of making coordinate measurements on workpieces with a coordinate measuring apparatus (1-4) which carries a video camera (6, 26, 36, 56, 66, 76) and a mechanical probe head (7, 47, 57, 77) having a probe element (8, 28, 48, 58, 78) for contact measuring the workpiece surface with the video camera and the mechanical probe head are so aligned to each other that the probe element is located in the viewing field (17, 27, 37, 87) of the video camera and with the locations on the workpiece which are to be mechanically contacted with the probe element being driven to under simultaneous visual control with the aid of a monitor (10) connected to the video camera.

2. Coordinate measuring apparatus having
- a video camera (6, 26, 36, 56, 66) which is connected to a monitor (10);
- a mechanical probe head (7, 47, 57, 77) movable in at least two spatial directions, the probe head carrying a probe element (8);
- a computer (12) as well as a control unit (11) connected thereto by which the movements of the probe head are controlled and the measurement signals emitted by the probe head are further processed;
- wherein the video camera and the mechanical probe head are so aligned to each other that the probe element is located in the viewing field (17, 27, 37, 87) of the video camera, so that the locations on the workpiece, which are to be mechanically contacted with to probe element can be driven to under simultaneous visual control with the aid of the monitor (10).

3. Coordinate measuring apparatus of claim 2, wherein the probe element (8) is attached to the probe head (7) via an extension (20) or an angle piece or the like.

4. Coordinate measuring apparatus of claim 2, wherein the probe element (40) is rotatable or pivotable.

5. Coordinate measuring apparatus of claim 2, wherein the video camera (26) is rotatable or pivotable.

6. Coordinate measuring apparatus of claim 2, wherein an element (31) is provided which deflects the beam path of the video camera (36) in the direction toward the probe element (28).

7. Coordinate measuring apparatus of claim 2, wherein the video camera (6) and mechanical probe head (7) are attached to a common carrier (5) and the probe element (8) of the mechanical probe head is attached via an electromechanical probe-changing unit (19) to the movable part (7a) of the probe head.

8. Coordinate measuring apparatus according to one of the claims 2 to 7, wherein the mechanical probe head is a miniature probe head in the form of a quartz oscillator probe (57, 77).

9. Coordinate measuring apparatus of one of the claims 2 to 8, having a illuminating unit (25) which makes the probe element (28) visible and excites scattered radiation.

10. Coordinate measuring apparatus of one of the claims 2 to 9, wherein the video camera (76) includes two optics (73a, 73b) which are suitable for receiving stereo images and the probe element (78) is located in the portion (80) of the viewing field (87a, 87b) common to both optics.

11. Coordinate measuring apparatus of one of the claims 2 to 10, wherein the optical axis of the video camera (26, 36) is inclined with respect to at least one of the machine axes of the coordinate measuring apparatus and the control of the coordinate measuring apparatus moves the mechanical probe head simultaneously in at least two coordinate directions corresponding to the inclination angle between the optical axis of the video camera and the particular machine axis (z).

12. Coordinate measuring apparatus of one of the claims 2 to 11, wherein an illuminating unit having several light sources is assigned to the video camera and the light sources radiate in various directions; and, the light sources can be so controlled individually or in groups that the intensity or direction of the illuminating light is adjustable.

13. Coordinate measuring apparatus of claim 2, wherein the video camera (56, 76) and the mechanical probe head (57, 77) or the probe element of the probe head are attached together to the same probe-changing unit (49, 79).

## Revendications

1. Procédé destiné à la mesure de coordonnées sur des pièces d'oeuvre à l'aide d'une machine à mesurer multicoordonnées (1-4) qui porte une caméra vidéo (6, 26, 36, 56, 66, 76) et une tête de palpage mécanique (7, 47, 57, 77) équipée d'un élément de palpage (8, 28, 48, 58, 78) pour la mesure par contact de la surface de la pièce d'oeuvre, où la caméra vidéo et la tête de palpage mécanique sont orientées l'une par rapport à l'autre de manière à ce que l'élément de palpage se trouve dans le champ de vision (17, 27, 37, 87) de la caméra vidéo et où le palpage des points à relever sur ladite pièce d'oeuvre à l'aide de l'élément de palpage mécanique s'effectue sous surveillance visuelle simultanée au moyen d'un écran de contrôle (10) connecté à la caméra vidéo.

2. Machine à mesurer multicoordonnées munie
- d'une caméra vidéo (6, 26, 36, 56, 66) qui est reliée à au moins un écran de contrôle (10),
- d'une tête de palpage mécanique (7, 47, 57, 77) équipée d'un élément de palpage (8) et mobile dans au moins deux directions de l'espace,
- d'un ordinateur (12) et d'une unité de commande (11) qui y est connectée et qui assure la commande des déplacements de la tête de palpage et le traitement des signaux de mesure provenant de ladite tête de palpage,
- où la caméra vidéo et la tête de palpage mécanique sont orientées l'une par rapport à l'autre de manière à ce que l'élément de palpage se trouve dans le champ de vision (17, 27, 37, 87) de la caméra vidéo, afin que le palpage des points à relever sur ladite pièce d'oeuvre à l'aide de l'élément de palpage mécanique puisse s'effectuer sous surveillance visuelle simultanée au moyen de l'écran de contrôle (10).

3. Machine à mesurer multicoordonnées selon la revendication 2, où l'élément de palpage (8) est monté sur la tête de palpage (7) par l'intermédiaire d'un bras (20), d'une pièce angulaire ou d'un élément similaire.

4. Machine à mesurer multicoordonnées selon la revendication 2, où l'élément de palpage (40) est orientable par rotation ou par pivotement.

5. Machine à mesurer multicoordonnées selon la revendication 2, où la caméra vidéo (26) est orientable par rotation ou par pivotement.

6. Machine à mesurer multicoordonnées selon la revendication 2, où un élément (31) est prévu pour la déflexion du trajet lumineux de la caméra vidéo (36) en direction de l'élément de palpage (28).

7. Machine à mesurer multicoordonnées selon la revendication 2, où la caméra vidéo (6) et la tête de palpage mécanique (7) sont montées sur un support commun (5) et où l'élément de palpage (8) de la tête de palpage mécanique est monté sur la partie mobile (7a) de ladite tête de palpage par l'intermédiaire d'un dispositif de changement électromécanique (19).

8. Machine à mesurer multicoordonnées selon l'une des revendications 2-7, où la tête de palpage mécanique est une tête de palpage miniaturisée sous forme d'un palpeur à quartz oscillant (57, 77).

9. Machine à mesurer multicoordonnées selon l'une des revendications 2-8, dotée d'un dispositif d'éclairage (25) qui met en évidence l'élément de palpage (28) ou émet un rayonnement diffusé au niveau dudit élément de palpage.

10. Machine à mesurer multicoordonnées selon l'une des revendications 2-9, où la caméra vidéo (76) contient deux optiques (73a, b) adaptées à l'enregistrement d'images stéréoscopiques et où l'élément de palpage (78) se trouve dans la zone de recouvrement (80) des champs de vision (87a et 87b) des deux optiques.

11. Machine à mesurer multicoordonnées selon l'une des revendications 2-10, où l'axe optique de la caméra vidéo (26, 36) est incliné par rapport à un axe machine au moins de la machine à mesurer multicoordonnées et où l'unité de commande de la machine à mesurer multicoordonnées déplace la tête de palpage mécanique simultanément dans au moins deux axes de coordonnées, en fonction de l'angle d'inclinaison formé par l'axe optique de la caméra vidéo et l'axe machine concerné (z).

12. Machine à mesurer multicoordonnées selon l'une des revendications 2-11, où l'on associe à la caméra vidéo un dispositif d'éclairage composé de plusieurs sources de lumière qui rayonnent dans des directions différentes et où les sources de lumière peuvent être actionnées individuellement ou par groupes, de manière à ce que l'intensité et/ou la direction de la lumière d'éclairage soient réglables.

13. Machine à mesurer multicoordonnées selon la revendication 2, où la caméra vidéo (56, 76) et la tête de palpage mécanique (57, 77) ou l'élément de palpage de la tête de palpage sont fixés ensemble sur le même support de changement (49, 79).
